# EUROPEAN PATENT APPLICATION

(11) **EP 2 476 659 A1**
(43) Date of publication of application: **18.07.2012**
(21) Application number: 10854353.9
(22) Date of filing: 06.12.2010
(51) Int. Cl.: C04B 28/04, C04B 22/06, C04B 14/06

(54) **LIGHT-WEIGHT AND ENERGY-SAVING PLASTERING MORTAR AND CONSTRUCTION METHOD THEREOF**

(30) Priority: 08.07.2010 CN 201010223052
(71) Applicant: Shenzhen Grandland Decoration Group Co., Ltd., Shenzhen, Guangdong 518003 (CN)
(72) Inventor: LI, Shaoqiang, Shenzhen Guangdong 518003 (CN); ZHANG, Qishan, Shenzhen Guangdong 518003 (CN); GUO, Xiaoyan, Shenzhen Guangdong 518003 (CN)
(74) Representative: Schmid, Klaus Michael Johannes
(86) International application number: PCT/CN2010/079484
(87) International publication number: WO 2012/003694

(57) **Abstract**

A light-weight and energy-saving plastering mortar comprising the following compositions by weight: 30-40% of Ordinary Portland Cement; 2-4% of hydrated lime; 10-20% of light aggregate; 40-50% of heavy aggregate; and 1.0% of compound additive, wherein said light aggregate is an inorganic vitrified microporous material with a fineness of smaller than 100 mesh, and wherein said heavy aggregate is aeolian sand. During use for construction, said mortar is diluted with water which accounts for 30-50% of the weight of said mortar, then said mortar and the water are stirred together either mechanically or manually until they are evenly mixed to achieve a viscosity suitable for mechanical spraying or manual application. The present invention is based on the light-weight and environmental friendly concepts in which light-weight aggregate of inorganic vitrified microporous material is employed to reduce the weight of the mortar, an elastic modulus of the mortar is matched with that of the light-weight wall substrate, the heat transmission coefficient is decreased, and the thermal bridge effect is minimized. Therefore, hollowing, cracking, and spalling can be prevented, heat- and sound- insulation are improved while mechanized construction is facilitated. The aggregate utilizes aeolian sand which features superior grading and distribution properties such that a three-dimensional texture is highlighted. The employment of a specific compound additive enhances the mortar workability and therefore a superior effect in application can be obtained.

## Description

### Technical Field

The present invention relates to a mortar for construction use, and more particularly to a formula of a light-weight and energy-saving plastering mortar and its method of use.

### Background Art

At present, it is common to use light-weight wall object such as aerated concrete block in construction projects with the regular existing mortar materials. The aerated concrete block has a mass ratio of about 600-800kg/m3, a heat transmission coefficient of 0.14-0.20W/(m•K25°C); and the existing mortar material in general has the composition and mass ratio as follows: Ordinary Portland Cement (OPC) 20-30, hydrated lime 0-5, limestone sand 60-75. This type of mortar has a specific density of 1700-1800kg/m3, which is not a light-weight mortar and does not match the light-weight wall object. In addition, this type of ordinary Portland Cement has a modulus of elasticity which is significantly greater than that of the aerated concrete block. Because of the differences of elastic modulus, the plaster surface will experience greater force of deformation and crack in the plaster surface will be resulted. Also, the ordinary plaster has relatively higher heat transmission coefficient (which is 0.93W/(m•K25°C), which leads to 'thermal bridge' effect and causes contraction and deformation in such a manner that the plaster surface is hollowed and cracked. Moreover, the workability of the regular existing mortar materials is poor and many workers found great difficulties in mixing paste and polishing. Accordingly, the usual practice is to sprinkle cement powder onto the surface for surface polishing and therefore the plaster surface is subject to cracking and fails to protect or reinforce the wall structure or building structure. The cracking and falling of plaster materials impose safety hazard to the worker and the owner.

The regular existing mortar materials use limestone sand as the aggregate. For dry mortar, the aggregate has to be further processed in order to fulfill the application requirement in which the major processing steps involve screening and drying so as to remove unnecessary contents in the sand, adjust a grading of the sand and decrease the water content in the sand. During drying, introduction of hazardous materials into the sand has to be avoided and therefore the fuel used has to be clean for the drying process and the cost is relatively high. On the other hand, energy is consumed when the sand is processed for artificially fragmentation, while a lot of side products are produced which causes pollution to the environment.

During the process of mechanical application, owing to the fact that the regular existing mortar materials constitute a high proportion by weight, has a high material requirement and a great load in vertical transportation, are not energy-saving while easily causing problems to the mortar machine such as pump blockage, pipe blockage, mortar gun blockage which hinder a smooth operation of the mechanical processing and hence the efficiency is low. Also, the process requires frequent watering on the base surface and surface processing, and relies heavily on the skill of workers. Since the weight of the mortar is heavy and the strength of bonding is insufficient, the mortar is subject to falling and deformation, and hence multi-layered processing is required and the efficiency is low.

### Summary of the Invention

An object of the present invention is to provide a light-weight, energy-saving and environmental friendly plastering mortar which utilizes aeolian sand as a main component and is suitable for use with light-weight wall object while capable of preventing hollowing, cracking, spalling of the mortar as well as facilitating mechanized application and featuring high bonding strength. At the same time, the present invention further provides a method of use of said mortar for construction.

To achieve the above objects, the present invention provides a light-weight, energy-saving plastering mortar comprising the following parts by weight:

Ordinary Portland Cement: 30-40,

hydrated lime: 2-4,

light aggregate: 10-20,

heavy aggregate: 40-50,

compound additive: 1.0;

wherein the light aggregate is an inorganic vitrified microporous material with a degree of fineness of less than 100 mesh;

wherein the heavy aggregate is aeolian sand.

The inorganic vitrified microporous material may have a fineness of 80-100 mesh.

The aeolian sand comprises an aeolian sand constituent with a fineness of 50-70 mesh and a percentage weight of greater than 9 % of the aeolian sand, wherein the rest of the aeolian sand has a fineness of greater than 100 mesh.

The compound additive comprises 0.15 part of methyl cellulose by weight, 0.2 part of superabsorbent polymer by weight, 0.3 part of air-entraining agent by weight, and 0.35 part of redispersable latex powder by weight.

The compound additive may be a C-type compound additive sold by Guangzhou Hecheng Trading Co., Ltd.

Preferably, the light-weight and energy-saving plastering mortar of the present invention comprises the following parts by weight:

Ordinary Portland Cement (OPC): 36,

hydrated lime: 3,

light aggregate: 15,

heavy aggregate: 45,

compound additive: 1.0.

The hydrated lime has a fineness of 300 mesh or above; the Ordinary Portland Cement has a fineness of 185 mesh or above.

In addition, the present invention further provides a method of using the above light-weight, energy-saving plastering mortar for construction, the method comprising the steps of: diluting said light-weight, energy-saving plastering mortar with water, wherein the water added accounts for 30-50% of the weight of the light-weight mortar; mechanically or manually stirring until they are mixed evenly so as to achieve a viscosity suitable for mechanical spraying or manual application. Mechanical spraying or manual application can then follow.

The present invention is based on the light-weight and environmental friendly concepts, which employs a specific light-weight aggregate of inorganic vitrified microporous material to reduce the weight percentage of sand stone so as to decrease the weight of the mortar materials, while matching the elastic modulus of the mortar and the light-weight wall object, decreasing the heat transmission coefficient, minimizing the thermal bridge effect, and therefore preventing hollowing, cracking, and falling off, and improving heat and sound insulation and facilitating mechanical operation or application. In addition, the aeolian sand from the northwest desert (such as Ning Xia Zhong Wei desert) is used as the aggregate of which the sand has superior grading and distribution, highlighting the three-dimensional texture and providing a superior decorative effect. Also, the present invention utilizes a special additive, which is a composite additive having high level of workability, such that a superior application effect is achieved. Moreover, the problem of heavyweight related to vertical transportation is solved or mitigated.

The present invention utilizes aeolian sand as the aggregate to formulate the mortar for use in wall objects. Since the fineness of the ordinary Portland cement is 185 mesh or above, and the fineness of the hydrated lime is 300 mesh or above, and the fineness of light-weight aggregate, which is the inorganic vitrified microporous material, is smaller than 100 mesh (preferably 80-100mesh), and the aeolian sand belongs to texture granules (preferably, 90% of the aeolian sand has a fineness of 50-70 mesh), therefore the distribution of the granular sand in the mortar resulted from this particle size arrangement leads to a superior mix such that the mortar layer as applied can demonstrate a protruding and indented pattern and texture similar to the appearance in nature. In addition, the mortar layer can be washed by water and polished to remove the concrete slurry on the surface and expose more layers of texture or surface, and is highly durable and environmental friendly. On the other hand, the particles mix is superior in that the filling effect is relatively complete and the mortar after drying has increased strength in stress resistance and tensile strength, that is to say, the stress and tensile force of deformation on the mortar layer are reduced and the damaging effect of hollowing, cracking and falling off on the mortar layer is effectively lessened. In addition, the aeolian sand, which is used as the aggregate for the mortar of the present invention, has superior properties against wearing and external force when compared to regular existing mortar. In other words, an additional thick protection layer is provided to the wall through the mortar of the present invention.

Aeolian sand, which is used as the aggregate of the mortar of the present invention, has superior properties in aging resistance and fade resistance which provides a solid and durable color to the wall object, when compared to regular existing organic mortar. Even if the surface is scratched, the color provided through the aggregate of aeolian sand is unchanged, and the color is not so obvious which is able to provide a simple and staple effect. The mortar layer is rich in expression and strong in texture which provides a natural, rich and strong European style and superior decorative effect or unique style to the surface of an architecture.

According to the present invention, the light-weight aggregate utilizes inorganic vitrified microporous material, which is the major element to the light-weight feature. The addition of the inorganic vitrified microporous material increases gaps in the mortar and greatly reduces the overall weight of the mortar. The dry apparent density (kg/m3) of mortar is decreased from 1700-1800 to 700-1000, the decrease in weight can decrease the heat transmission coefficient W/(m•K25°C) to reach a level of 0.15-0.25, which is equivalent to autoclaved aerated concrete block. In this way, the thermal bridge effect is avoided (the thermal bridge effect is resulted from the differences in heat transmission ability and uneven heat transmission, which lead to contraction deformation, condensation and mildew formation or even water drop, and then hollowing, cracking, and falling off of the mortar), and the contraction deformation is effective reduced. Also, heat insulation and temperature resistance is greatly increased.

According to the light-weight mortar of the present invention, the problem of cracking is mitigated which ensures the quality of the construction project is maintained: 1) common existing wall objects are aerated concreted which belongs to light-weight wall objects, the elastic modulus of the light-weight wall object and the light-weight mortar are fitted to use together (elastic modulus refers to a tendency to deform elastically caused by the deformation force resulted from the changes in humidity, surrounding temperature, and water content of hydrated products and carbonized products produced in the drying substances during a drying process of the surface mortar, wherein when the value is higher, the deformation force is higher. That is to say, under the effect of a unit force, the elastic deformation is lower when the light-weight mortar of the present invention is used), such that the elastic modulus of the mortar is increased to a value which is close to the elastic modulus of the base structure (such as the wall object) such that the elastic modulus of the mortar and the base structure are similar in level and the force required to cause elastic deformation are approximately the same; 2) inorganic vitrified microporous material provides micro pores which is capable of blocking micro-cracking development in the mortar after drying, therefore decreasing the stress concentration factor of the gaps in the mortar and increasing the resistance to tensile and shearing forces; 3) the additive further provides a composite additive which contains methyl cellulose which has a strong cross-linking effect such that the composition which includes the cement, the light-weight aggregate and the heavyweight aggregate can be mixed to form a three-dimensional structure in which the cellulose provides a long-chain structure and interlinking ability to the surface and hence the compositions can be bonded effectively. In addition, the cellulose cell dimension is stable and therefore the different elements in the compositions are well-linked and will not easily contracted and settled, therefore the possibility of hollowing and cracking is reduced; 4) the composite additive further includes a redispersable latex powder which contributes a preset level of flexibility to the mortar such that the strength of tensile force resistance and the elasticity and contraction resistance are further increased. In other words, the architecture is just like wearing an elastic jacket and has achieved a special level of toughness.

The light-weight mortar of the present invention is capable of increasing the workability related to operation or application of the mortar, therefore is advantageous to use in mechanical application in which pumping and spraying are required. Accordingly, the efficiency and quality of the application is increased dramatically. 1) the addition of microporous inorganic vitrified material can lighten the mortar, making movements of the sand particles between particles of different sizes in the composition relatively easy and smoothen the texture of the composition, that is, the workability and the spraying ability are increased; 2) the composite additive, which is the C-type compound additive, contains methyl cellulose which has a strong linkage ability and is capable of retaining water therein such that the mortar has improved water retaining ability and is easier to manipulate when applying on a work surface; 3) the redispersable latex powder can also improve the fluidity of the mortar. 4) the superior mix of the composition in view of particle size and the light-weight construction can allow the mortar of the present invention to be used in mechanical application. Since the particle size distribution curve and the pumpability have a direct proportional relationship, when the particle size distribution is increased, the pumpability is increased. In other words, the light-weight feature in mortar construction of the mortar of the present invention solves the problems of pump blockage, pipe blockage or gun blockage of the regular existing mortar.

The use of microporous inorganic vitrified material can increase the porosity of the light-weight mortar of the present invention, decrease the material usage per unit area, and dramatically decrease the weight requirement for vertical transportation through the light-weight feature, therefore energy efficient is achieved and the cost of manufacture per unit area is reduced effectively.

The light-weight mortar of the present invention is complementary to the light-weight wall object so that the problems of hollowing, cracking and falling off are solved. The property of crack resistance is good and the bond strength is sufficient, therefore the hardened layer of mortar can be used in the absence of any additional mesh support and without any problems of hollowing and falling off. The mortar is very suitable for use in protruding and indented corners, easy to leveling, and suitable to facilitate modular and mechanical application. The step of application is simple and practical while the cost of manufacture per unit square meter is low. Through reducing the vertical transportation weight requirement, the heat insulation and sound insulation is improved, thereby achieving an energy efficient effect. The mortar makes use of aeolian sand which is a source derived from an environmental friendly manufacture method, therefore capable of exploring and making use of remote desert natural resources in urban area for providing construction materials on a large scale, and therefore assisting development in areas surrounding the desert which may promote desert wind management, afforestation and restoration of natural environment, carbon dioxide capture and carbon capture. These are all very important issues and the exploration of use of aeolian sand in construction is a very meaningful project which is novel and bold exploration and attempt.

### Detailed Description of the Preferred Embodiments

According to the present invention, a composition of light-weight and energy-saving mortar having a mixture composition by weight present invention is provided. The mixture composition can make use of substances and products in the market. Five exemplary embodiments with different mixture compositions and their weights are illustrated in Table 1.

**Table 1 (Unit: Kilogram)**

| Item no. | Name of raw materials | Manufacture or model | Exemplary Embodiment | | | | |
|---|---|---|---|---|---|---|---|
| | | | 1 | 2 | 3 | 4 | 5 |
| 1 | Ordinary Portland cement | general | 30 | 32 | 36 | 37 | 40 |
| 2 | Hydrated lime | general | 4 | 3 | 3 | 2 | 2 |
| 3 | light aggregate | Huayu Mining | 15 | 16 | 15 | 20 | 10 |
| 4 | heavy aggregate | NingXia Zhongwei | 50 | 48 | 45 | 40 | 47 |
| 5 | compound additive | Guangzhou Hecheng | 1 | 1 | 1 | 1 | 1 |

The ordinary Portland Cement has a fineness of 185 mesh or above and the hydrated lime has a fineness of 300 mesh or above from general manufacturers in the market; preferably, the light-weight aggregate is a microporous inorganic vitrified material which has a fineness of 80-100 mesh (a fineness of 100 mesh or below can be used in the present invention); the heavy-weight aggregate utilizes aeolian sand from Ning Xia Zhong Wei desert, wherein the aeolian sand is formed after natural wind transportation, grading and settlement onto the ground, its particle size is evenly distributed, small, and its composition is stable, wherein in the aeolian sand, 90% of the aeolian sand has a fineness of 50-70 mesh and the rest has a fineness greater than 100 mesh.

The compound additive is a C-type composite additive obtained from Guangzhou Hecheng Trading Co., Ltd. In each of the following exemplary embodiments, each kg of composite additive includes 0.15kg methyl cellulose, 0.2kg superabsorbent agent, 0.3kg air-entraining agent and 0.35kg redispersable latex powder. The C-type compound additive is obtained in the existing market and can be obtained from general manufacturers.

The present invention is further described in details as follows:

Embodiment 1

The mixture composition is obtained according to the composition as shown in Table 1, and then is processed as follows: mixing ordinary Portland cement, hydrated lime, light-weight aggregate, heavy-weight aggregate (aeolian sand) and C-type compound additive; stirring evenly through mechanical mixing device to obtain the product of light-weight and energy-saving mortar of embodiment 1 of the present invention; then packing by paper bag or placing in a container.

Application method (Method of Use): Obtain 100kg of light-weight and energy saving mortar of embodiment 1 of the present invention; add 30kg water to dilute the mortar; and mixing evenly by mechanical or manual method such that the diluted mortar has a viscosity which is suitable for mechanical application (such as spraying) or manual application (such as coating). Then, the diluted mortar can be used for application, by mechanical tools or by hands.

According to the national standard in China or in the field, standard tests are performed and the results are shown in the data for embodiment 1 in Table 2. The testing basis of hardened surface density, heat transmission coefficient and tensile strength resistant are GB/T20473-2006, and the basis of bonding strength (28d) is SJG11-2004.

Embodiment 2

The mixture composition is obtained according to the composition for embodiment 2 in Table 1, and is then processed with the same method as described in embodiment 1 to obtain the product of light-weight and energy-saving mortar of embodiment 2 of the present invention; repeat the application method described in embodiment 1, add 35kg water to dilute the mortar; and mixing evenly by mechanical or manual method; and then apply the diluted mortar by mechanical tools or by hands. Standard performance testing is conducted as in embodiment 1 and the results are shown in the data for embodiment 2 in Table 2.

Embodiment 3

The mixture composition is obtained according to the composition for embodiment 3 in Table 1, and is then processed with the same method as described in embodiment 1 to obtain the product of light-weight and energy-saving mortar of embodiment 3 of the present invention; repeat the application method described in embodiment 1, obtain 100kg mortar and add 40kg water to dilute the mortar; and mixing evenly by mechanical or manual method; and then apply the diluted mortar by mechanical tools or by hands. Standard performance testing is conducted as in embodiment 1 and the results are shown in the data for embodiment 3 in Table 2.

Embodiment 4

The mixture composition is obtained according to the composition for embodiment 4 in Table 1, and is then processed with the same method as described in embodiment 1 to obtain the product of light-weight and energy-saving mortar of embodiment 4 of the present invention; repeat the application method described in embodiment 1, obtain 100kg mortar and add 45kg water to dilute the mortar; and mixing evenly by mechanical or manual method; and then apply the diluted mortar by mechanical tools or by hands. Standard performance testing is conducted as in embodiment 1 and the results are shown in the data for embodiment 4 in Table 2.

Embodiment 5

The mixture composition is obtained according to the composition for embodiment 5 in Table 1, and is then processed with the same method as described in embodiment 1 to obtain the product of light-weight and energy-saving mortar of embodiment 5 of the present invention; repeat the application method described in embodiment 1, obtain 100kg mortar and add 50kg water to dilute the mortar; and mixing evenly by mechanical or manual method; and then apply the diluted mortar by mechanical tools or by hands. Standard performance testing is conducted as in embodiment 1 and the results are shown in the data for embodiment 5 in Table 2.

**Table 2**

| Item no. | Description | Exemplary Embodiment | | | | |
|---|---|---|---|---|---|---|
| | | 1 | 2 | 3 | 4 | 5 |
| 1 | hardened surface density, kg/m3 | 938 | 843 | 781 | 709 | 986 |
| 2 | heat transmission coefficient, W/(m•K) | 0.23 | 0.19 | 0.18 | 0.16 | 0.25 |
| 3 | Bond strength (28th day), MPa | 0.36 | 0.39 | 0.41 | 0.44 | 0.48 |
| 4 | Compression Strength, MPa | 2.0 | 2.03 | 2.07 | 1.70 | 2.64 |

## Claims

1. A light-weight and energy-saving plastering mortar, comprising the following compositions by weight: 30-40% of Ordinary Portland Cement; 2-4% of hydrated lime; 10-20% of light aggregate; 40-50% of heavy aggregate; and 1.0% of compound additive; wherein said light aggregate is an inorganic vitrified microporous material with a fineness of smaller than 100 mesh; wherein said heavy aggregate is aeolian sand.

2. The plastering mortar as recited in claim 1, wherein the fineness of said inorganic vitrified microporous material of said light aggregate is 80-100 mesh.

3. The plastering mortar as recited in claim 1, wherein said aeolian sand comprises an aeolian sand constituent with a fineness of 50-70 mesh and a percentage weight of greater than 90% of said aeolian sand, wherein the remaining aeolian sand has a fineness of greater than 100 mesh.

4. The plastering mortar as recited in any one of claims 1 to 3, wherein said compound additive comprises, by weight, 0.15 parts of methyl cellulose, 0.2 parts of superabsorbent agent, 0.3 parts of air-entraining agent and 0.35 parts of redispersable latex powder.

5. The plastering mortar as recited in claim 4, wherein said additive is a type-C compound additive sold by Guangzhou Hecheng Trading Co., Limited.

6. The plastering mortar as recited in claim 4, wherein the compositions by weight are of the following: 36% of Ordinary Portland Cement; 3% of hydrated lime; 15% of light aggregate; 45% of heavy aggregate; and 1.0% of compound additive.

7. The plastering mortar as recited in claim 1, wherein said hydrated lime has a fineness of 300 mesh or above, and wherein said Ordinary Portland Cement has a fineness of 185 mesh or above.

8. A method of using the plastering mortar as recited in any one of claims 1 to 7, comprising the steps of: diluting said plastering mortar with water accounting for 30-50% of the weight of said plastering mortar; mechanically or manually stirring until said mortar and the water are evenly mixed to achieve a viscosity suitable for mechanical spraying or manual application.
